# EUROPEAN PATENT APPLICATION

(11) **EP 4 686 127 A1**
(43) Date of publication of application: **28.01.2026**
(21) Application number: 23940164.9
(22) Date of filing: 09.06.2023
(51) Int. Cl.: H04L 5/00, H04W 52/02

(54) **WIRELESS COMMUNICATION METHODS, FIRST TERMINAL DEVICES AND SECOND TERMINAL DEVICES**

(71) Applicant: GUANGDONG OPPO MOBILE TELECOMMUNICATIONS CORP., LTD., Dongguan, Guangdong 523860 (CN)
(72) Inventor: DING, Yi, Dongguan, Guangdong 523860 (CN); ZHAO, Zhenshan, Dongguan, Guangdong 523860 (CN)
(74) Representative: Penza, Giancarlo
(86) International application number: PCT/CN2023/099404
(87) International publication number: WO 2024/250281

(57) **Abstract**

Provided in the present application are wireless communication methods, first terminal devices, and second terminal devices. A method comprises: performing LBT on at least one first transmission resource; and then on a first transmission resource on which LBT has been successfully performed amongst the at least one first transmission resource, sending a wake-up signal to a second terminal device, an activation time period corresponding to the wake-up signal comprising a second transmission resource, and the second transmission resource being used for transmitting a first physical sidelink channel. In the present embodiment, on the basis of introducing the wake-up signal, the second transmission resource used for transmitting the first physical sidelink channel is associated with the activation time period corresponding to the wake-up signal, such that the wake-up signal can be combined to a sidelink license-free system, thereby not only reducing energy consumption of the second terminal device, but also ensuring the reliability of transmitting the first physical sidelink channel.

## Description

### TECHNICAL FIELD

Embodiments of the present disclosure relate to the field of communications, and more particularly to, methods for wireless communication, terminal devices and network devices.

### BACKGROUND

The 3rd Generation Partnership Project (3GPP) standard protocol introduces a Discontinuous Reception (DRX) mechanism energy saving strategy into a Long Term Evolution (LTE) system. The basic mechanism of the DRX is that a DRX cycle is configured for User Equipment (UE). The DRX cycle consists of an on duration and a dormant duration (opportunity for DRX). The UE monitors and receives a Physical Downlink Control Channel (PDCCH) in the on duration; and UE does not receive the PDCCH in the dormant duration to reduce the power consumption.

For a sidelink (SL) system, the SL DRX is introduced in the Release 17 (R17) to reduce the energy consumption of the terminal.

However, how to further reduce the energy consumption of the terminal is still a problem to be solved urgently in this field.

### SUMMARY

The present disclosure provides methods for wireless communication, first terminal devices and second terminal devices, which can not only reduce the energy consumption of the terminal, but also ensure reliability of sidelink transmission.

In a first aspect, the embodiments of the present disclosure provide a method for wireless communication including following operations.

Listen Before Talk (LBT) is performed on at least one first transmission resource.

A wake up signal is sent to a second terminal device on a first transmission resource on which the LBT is successful among the at least one first transmission resource.

Herein, an active time period corresponding to the wake up signal includes a second transmission resource, and the second transmission resource is used for transmission of a first physical sidelink channel.

In a second aspect, the embodiments of the present disclosure provide a method for wireless communication including a following operation.

A wake up signal sent by a first terminal device is received.

Herein, an active time period corresponding to the wake up signal includes a second transmission resource, and the second transmission resource is used for transmission of a first physical sidelink channel.

In a third aspect, the embodiments of the present disclosure provide a second terminal device configured to perform the method in the first aspect or various implementations thereof involved in the foregoing. Specifically, the second terminal device includes functional modules configured to perform the method in the first aspect or various implementations thereof involved in the foregoing.

In an implementation, the second terminal device may include a processing unit configured to perform functions related to information processing. For example, the processing unit may be a processor.

In an implementation, the second terminal device may include a sending unit and/or a receiving unit. The sending unit is configured to perform functions related to sending, and the receiving unit is configured to perform functions related to reception. For example, the sending unit may be a sending device or a transmitter and the receiving unit may be a receiving device or a receiver. For another example, the second terminal device is a communication chip, the sending unit may be an input circuit or an input interface of the communication chip, and the sending unit may be an output circuit or an output interface of the communication chip.

In a fourth aspect, the embodiments of the present disclosure provide a first terminal device configured to perform the method in the second aspect or various implementations thereof involved in the foregoing. Specifically, the first terminal device includes functional modules configured to perform the method in the second aspect or various implementations thereof involved in the foregoing.

In an implementation, the first terminal device may include a processing unit configured to perform functions related to information processing. For example, the processing unit may be a processor.

In an implementation, the first terminal device may include a sending unit and/or a receiving unit. The sending unit is configured to perform functions related to sending, and the receiving unit is configured to perform functions related to reception. For example, the sending unit may be a sending device or a transmitter and the receiving unit may be a receiving device or a receiver. For another example, the first terminal device is a communication chip, the receiving unit may be an input circuit or an input interface of the communication chip, and the sending unit may be an output circuit or an output interface of the communication chip.

In a fifth aspect, the embodiments of the present disclosure provide a second terminal device including a transceiver, a processor and a memory. The memory is configured to store a computer program and the processor is configured to invoke and execute the computer program stored in the memory, to enable the transceiver and/or the processor to perform the method in the first aspect or various implementations thereof involved in the foregoing.

In an implementation, there are one or more processors, and there are one or more memories.

In an implementation, the memory may be integrated with the processor, or the memory may be provided separately from the processor.

In an implementation, the transceiver includes a sending device (transmitter) and a receiving device (receiver).

In a sixth aspect, the embodiments of the present disclosure provide a first terminal device including a transceiver, a processor and a memory. The memory is configured to store a computer program and the processor is configured to invoke and execute the computer program stored in the memory, to enable the transceiver and/or the processor to perform the method in the second aspect or various implementations thereof involved in the foregoing.

In an implementation, there are one or more processors, and there are one or more memories.

In an implementation, the memory may be integrated with the processor, or the memory may be provided separately from the processor.

In an implementation, the transceiver includes a sending device (transmitter) and a receiving device (receiver).

In a seventh aspect, the embodiments of the present disclosure provide a chip configured to implement the method in any one of the first aspect and the second aspect or various implementations thereof involved in the foregoing. Specifically, the chip includes a processor configured to invoke and execute a computer program from a memory, to cause a device on which the chip is mounted to perform the method in any one of the first aspect and the second aspect or various implementations thereof involved in the foregoing.

In an eighth aspect, the embodiments of the present disclosure provide a computer-readable storage medium configured to store a computer program, where the computer program, when executed on a computer, causes the computer to perform the method in any one of the first aspect and the second aspect or various implementations thereof involved in the foregoing.

In an ninth aspect, the embodiments of the present disclosure provide a computer program product including computer program instructions that cause a computer to perform the method in any one of the first aspect and the second aspect or various implementations thereof involved in the foregoing.

In a tenth aspect, the embodiments of the present disclosure provide a computer program, where the computer program, when executed on a computer, causes the computer to perform the method in any one of the first aspect and the second aspect or various implementations thereof involved in the foregoing.

Based on the above technical schemes, the method for wireless communication provided by the present disclosure includes: the LBT is performed on at least one first transmission resource; and the wake up signal is sent to the second terminal device on the first transmission resource on which the LBT is successful among the at least one first transmission resource, where the active time period corresponding to the wake up signal includes the second transmission resource, and the second transmission resource is used for transmission of the first physical sidelink channel. In the embodiment, based on the introduction of the wake up signal, the second transmission resource for the transmission of the first physical sidelink channel is associated with the active time period corresponding to the wake up signal, so that the wake up signal may be combined with the sidelink grant-free system, thereby not only reducing the energy consumption of the second terminal device, but also ensuring the reliability of the transmission of the first physical sidelink channel. In addition, the first terminal device sends the wake up signal to the second terminal device on the first transmission resource on which the LBT is successful among the at least one first transmission resource, and when the at least one first transmission resource includes multiple transmission resources, the reliability of the transmission of the wake up signal can be ensured, and accordingly, the reliability of the transmission of the first physical sidelink channel can be improved.

### BRIEF DESCRIPTION OF THE DRAWINGS

FIG. 1 is a schematic diagram of an architecture of a communication system according to the present disclosure.
FIG. 2 is another schematic diagram of an architecture of a communication system according to the present disclosure.
FIG. 3 is a schematic diagram of sidelink communication within a network coverage according to the present disclosure.
FIG. 4 is a schematic diagram of sidelink communication partly within a network coverage according to the present disclosure.
FIG. 5 is a schematic diagram of sidelink communication outside a network coverage according to the present disclosure.
FIG. 6 is a schematic diagram of unicast sidelink communication according to the present disclosure.
FIG. 7 is an example of resource selection in a second mode according to the present disclosure.
FIG. 8 is an example of a DRX according to the present disclosure.
FIG. 9 is an example of an energy saving signal according to the present disclosure.
FIG. 10 is a flowchart of a method for wireless communication according to the present disclosure.
FIG. 11 is another example of a method for wireless communication according to an embodiment of the present disclosure.
FIG. 12 is a schematic block diagram of a first terminal device according to an embodiment of the present disclosure.
FIG. 13 is a schematic block diagram of a second terminal device according to an embodiment of the present disclosure.
FIG. 14 is a schematic block diagram of a communication device according to an embodiment of the present disclosure.
FIG. 15 is a schematic block diagram of a chip according to an embodiment of the present disclosure.

### DETAILED DESCRIPTION

Hereinafter, technical schemes in the embodiments of the present disclosure are described with reference to the accompanying drawings.

The technical schemes in the embodiments of the present disclosure may be applied to various communication systems.

Exemplarily, the communication systems to which the technical schemes of the embodiments of the present disclosure may be applied include, but are not limited to: a Global System Of Mobile Communication (GSM) system, a Code Division Multiple Access (CDMA) system, a Wideband Code Division Multiple Access (WCDMA) system, a General Packet Radio Service (GPRS), a LTE system, an Advanced Long Term Evolution (LTE-A) system, a New Radio (NR) system, an evolution system for NR system, a LTE-based access to Unlicensed Spectrum (LTE-U) system, a NR-based access to Unlicensed Spectrum (NR-U) system, a Non-Terrestrial Networks (NTN) system, a Universal Mobile Telecommunication System (UMTS), a Wireless Local Area Network (WLAN), a Wireless Fidelity (Wi-Fi), a 5th-generation (5G) system or other communication systems.

The embodiments of the present disclosure may also be applied to any communication framework of terminal device to terminal device.

Exemplarily, the embodiments of the present disclosure may be applied to communication frameworks, such as, a Device to Device (D2D) communication, a Machine to Machine (M2M) communication, a Machine Type Communication (MTC), a Vehicle to Vehicle (V2V) communication, or a Vehicle to everything (V2X).

The communication system to which the embodiments of the present disclosure may be applicable may be applied to a Carrier Aggregation (CA) scenario, a Dual Connectivity (DC) scenario, and a Standalone (SA) network distribution scenario.

The communication system in the present disclosure may be applied to an unlicensed spectrum, and the unlicensed spectrum may also be considered as a shared spectrum. Alternatively, the communication system in the present disclosure may also be applied to a licensed spectrum, and the licensed spectrum may also be considered as a non-shared spectrum.

The various embodiments of the present disclosure are described in connection with a network device and a terminal device.

Exemplarily, the terminal device involved in the present disclosure may be any device or apparatus configured with a physical layer and a media access control layer.

For example, the terminal device involved in the present disclosure may also be referred to as the UE, an access terminal, a user unit, a user station, a mobile station, a remote station, a remote terminal, a mobile device, a user terminal, a terminal, a wireless communication device, a user agent or a user device, etc.

For another example, the terminal device involved in the present disclosure may be a STATION (ST) in the WLAN, a cellular telephone, a cordless telephone, a Session Initiation Protocol (SIP) telephone, a Wireless Local Loop (WLL) station, a Personal Digital Assistant (PDA) device, a handheld device having a wireless communication function, a computing device or other linear processing device connected to a wireless modem, a vehicle-mounted device, a wearable device, a terminal device in a next generation communication system such as an NR network, or a terminal device in a future evolved Public Land Mobile Network (PLMN) network, etc. The wearable device may also be referred to as a wearable smart device, which is a general term of wearable devices that are intelligently designed and developed by applying wearable technology to daily wear, such as, glasses, gloves, watches, clothing and shoes. The wearable device is a portable device that is worn directly on the body or integrated into the user's clothes or accessories. The wearable device is not only a kind of hardware device, but also realizes functions through software support, data interaction and cloud interaction. The generalized wearable smart device has full functions and a large size, and the generalized wearable smart device may realize complete or partial functions without relying on smart phones, such as smart watches or smart glasses, and the generalized wearable smart device only focus on certain application functions and need to be used in conjunction with other devices (such as, smart phones), such as, various smart bracelets and smart jewelry for monitoring physical signs.

For another example, the terminal device involved in the embodiments of the present disclosure may be a mobile phone, a Pad, a computer with wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, or a wireless terminal device in smart home, etc.

It is worth to be noted that the terminal device involved in the embodiments of the present disclosure may be deployed on land, and include indoor or outdoor device, hand-held device, wearable device or vehicle-mounted device. The terminal device may also be deployed on the water (such as on the ships, etc.). The terminal device may also be deployed in the air (such as, in airplanes, in balloons and in satellites, etc.).

Exemplarily, the network device involved in the present disclosure may be a device configured to communicate with the terminal device.

For example, the network device involved in the present disclosure may provide services for a cell, i.e., the terminal device communicates with the network device through transmission resources (e.g., frequency-domain resources, or spectrum resources) used by the cell. The cell may be a cell corresponding to the network device (e.g., base station), and the cell may belong to a macro base station or a base station corresponding to a small cell. The small cell may include a metro cell, a micro cell, a Pico cell, a Femto cell, etc. These small cells have characteristics of small coverage and low transmission power, and the small cells are suitable for providing high-speed data transmission services.

For example, the network device may be an Access Point (AP) in the WLAN, a Base Transceiver Station (BTS) in the GSM or the CDMA, a NodeB (NB) in the WCDMA, an evolved Node B (eNB or eNodeB) in the LTE, a relay station or an access point, a vehicle-mounted device, a wearable device, a network device or gNB in an NR network, a network device in the future evolved PLMN network or a network device in the NTN network, etc.

It is to be noted that the terms used in the embodiments of the present disclosure are only used for explaining specific embodiments of the present disclosure, and are not intended to limit the present disclosure.

For example, the term "and/or" is only an association relationship describing associated objects and represents that three relationships may exist. For example, A and/or B may represent three conditions: i.e., independent existence of A, existence of both A and B and independent existence of B. The term "at least one" is only a combination relationship describing the enumerated objects, and represents that one or more may exist. For example, at least one of A, B or C may represent the following combinations: independent existence of A, independent existence of B, independent existence of C, existence of both A and B, existence of both A and C, existence of both B and C, and existence of all A, B and C. The term "multiple" refers to two or more. The character "/" generally indicates that the relationship between the related objects is "or".

For another example, the term "correspond" may represent that there is a direct correspondence or an indirect correspondence between the two, may also represent that there is an association relationship between the two, and may also be a relationship between indication and being indicated, configuration and being configured, etc. The term "indication" in the embodiments of the present disclosure may be a direct indication, may be an indirect indication, or may be indicative of an association. For example, A indicates B, which may represent that A directly indicates B, for example, B may be obtained through A; it may also represent that A indirectly indicates B, for example, A indicates C, and B may be obtained by C; and it may also represent that there is an association between A and B. The term "predefined" or "preconfigured" may be achieved by pre-storing corresponding codes, tables or other means used for indicating relevant information in devices (e.g., including terminal devices and network devices), and the specific implementation thereof is not limited in the present disclosure. For example, "predefined" or "preconfigured" may refer to what is agreed in the protocol. The "protocol" may be a standard protocol in the communication field. For example, the protocol may include an LTE protocol, an NR protocol, WiFi and related protocols applied in future communication systems, which are not limited in the present disclosure. The term "in a case where" may be interpreted as "if" or "when" or "in response to" or the like. Similarly, depending on the context, the phrase "if determining (a stated condition or event)" or "if detecting (a stated condition or event)" may be interpreted as "when determining (a stated condition or event)" or "in response to determining (a stated condition or event)" or "when detecting (a stated condition or event)" or "in response to detecting (a stated condition or event)" or the like. The terms "first", "second", "third", "fourth", "A-th", "B-th" and the like are used to distinguish different objects and are not used to describe a particular order. The terms "including" and "having" and any variations thereof are intended to cover non-exclusive inclusion.

In order to facilitate understanding of the embodiments provided by the present disclosure, contents related to the schemes provided by the present disclosure are described below.

### (1) Sidelink (SL) transmission technology

The sidelink transmission technology is a transmission technology of the communication between terminals, which is different from the traditional manner where communication data is received or sent by a base station in the cellular system. Therefore, the sidelink transmission technology has higher spectrum efficiency and lower transmission delay. For example, the manner of Device to Device (D2D) direct communication is adopted in the V2X system.

### (2) Sidelink communication in different network coverage environments

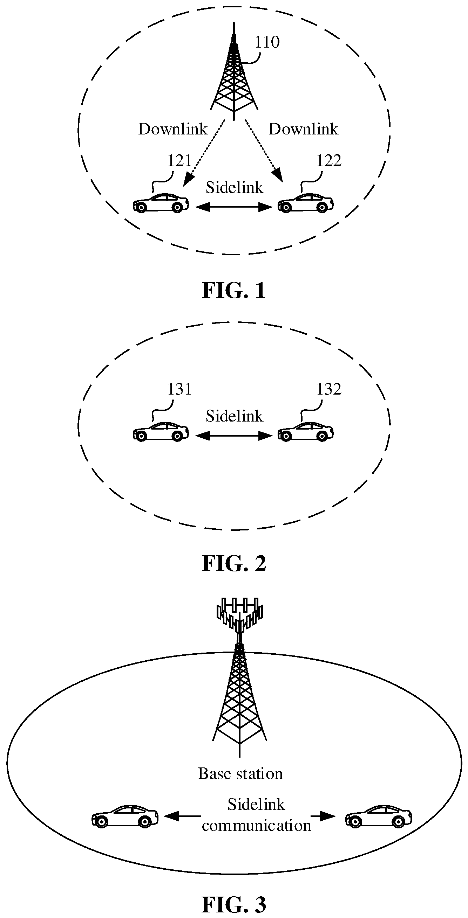

FIG. 1 is a schematic diagram of an architecture of a communication system according to the present disclosure.

As shown in FIG. 1, transmission resources of vehicle-mounted terminals (a vehicle-mounted terminal 121 and a vehicle-mounted terminal 122) are allocated by a base station 110, and the vehicle-mounted terminals send data on the sidelink according to the resources allocated by the base station 110. Specifically, the base station 110 may allocate, to the terminal, resources for single transmission or semi-static transmission.

FIG. 2 is another schematic diagram of an architecture of a communication system according to the present disclosure.

As shown in FIG. 2, vehicle-mounted terminals (a vehicle-mounted terminal 131 and a vehicle-mounted terminal 132) autonomously select transmission resources among resources of the sidelink to perform data transmission. Optionally, the vehicle-mounted terminals may randomly select the transmission resources or select the transmission resources by means of sensing.

In the sidelink communication, according to the network coverage situation where the terminal performing the communication is located, the sidelink communication may be divided into the sidelink communication within the network coverage, the sidelink communication partly within the network coverage, and the sidelink communication outside the network coverage.

FIG. 3 is a schematic diagram of sidelink communication within a network coverage according to the present disclosure.

As shown in FIG. 3, in the sidelink communication within the network coverage, all the terminals performing the sidelink communication are located within the coverage of the base station, so that all the terminals are able to perform the sidelink communication, based on the same sidelink configuration, by receiving configuration signaling from the base station.

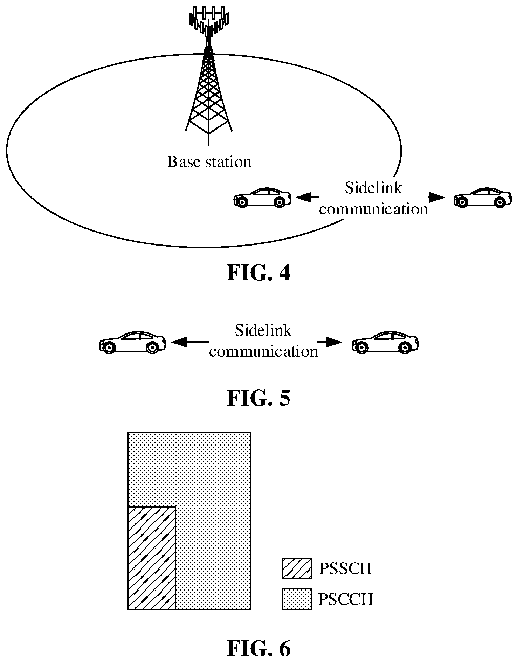

FIG. 4 is a schematic diagram of sidelink communication partly within a network coverage according to the present disclosure.

As shown in FIG. 4, in the case of the sidelink communication partly within the network coverage, a part of terminals performing the sidelink communication are located within the coverage of the base station, and these terminals are able to receive the configuration signaling from the base station and perform the sidelink communication according to the configuration from the base station. Terminals located outside the network coverage are unable to receive the configuration signaling from the base station. In this case, the terminals outside the network coverage determine the sidelink configuration according to pre-configuration information and information carried in a Physical Sidelink Broadcast Channel (PSBCH) sent by the terminal located within the network coverage, so as to perform the sidelink communication.

FIG. 5 is a schematic diagram of sidelink communication outside a network coverage according to the present disclosure.

As shown in FIG. 5, for the sidelink communication outside the network coverage, all terminals performing the sidelink communication are located outside the network coverage, and all terminals determine the sidelink configuration according to pre-configuration information to perform the sidelink communication.

### (3) Physical layer structure of the SL

FIG. 6 is an example of a physical layer structure of an SL according to the present disclosure.

As shown in FIG. 6, the physical layer structure of the SL includes a Physical Sidelink Shared Channel (PSSCH) and a Physical Sidelink Control Channel (PSCCH). The PSCCH is used for transmitting (or sending) the first sidelink control information, the PSSCH is used for bearing data and the second sidelink control information, and the PSCCH and the PSSCH are sent in the same slot. The first sidelink control information is beard in the PSCCH and includes field(s) related to resource sensing, so as to facilitate resource exclusion and resource selection by other UEs after decoding the fields. Besides the data, the PSSCH also bears the second sidelink control information, and the second sidelink control information mainly includes field(s) related to data demodulation, so as to facilitate demodulation of data in the PSSCH by other UEs.

### (4) Resource allocation in the sidelink

For the sidelink, the 3GPP defines two transmission allocation modes: the first mode and the second mode.

In the first mode, transmission resources of the terminal are allocated by the base station, and the terminal sends data on the sidelink according to the resources allocated by the base station. The base station may dynamically schedule resources for the terminal, or may allocate resources for the semi-static transmission to the terminal. The terminals are located within the network coverage, and the network allocates the transmission resources for the sidelink transmission to the terminals. In the dynamic scheduling, the base station sends downlink control information to the terminal, and the downlink control information indicates one or more resources, and the terminal performs the data transmission on the indicated resources. In the semi-static scheduling, the base station configures a grant-free sidelink transmission resource (also referred to as a Sidelink Configured Grant (SL CG)) for the terminal, which is generally a periodic grant-free resource. When the terminal has data for transmission, the terminal may directly use the grant-free sidelink transmission resource. The SL CG is classified into type-1 SL CG and type-2 SL CG.

For the type-1 SL CG, the network configures sidelink grant-free transmission resources and transmission parameters for the UE through Radio Resource Control (RRC) signaling.

For the type-2 SL CG, the network configures a part of transmission parameters for the UE through the RRC signaling and activates the SL CG through DCI signaling. The DCI is used for configuring the sidelink transmission resources. If the network expects the UE to report sidelink feedback information, the DCI is further used for configuring Physical Uplink Control Channel (PUCCH) transmission resources.

In the second mode, the terminal selects one or more resources from a resource pool to perform data transmission. For example, for the sidelink communication within the network coverage shown in FIG. 3, the terminal may autonomously select transmission resources from the resource pool configured by the network to perform the sidelink transmission. For another example, for the sidelink communication outside the network coverage shown in FIG. 5, the terminal may autonomously select transmission resources from a preconfigured resource pool to perform the sidelink transmission.

Specifically, in the second mode, while performing the data transmission in the PSSCH, the terminal indicates the reservation of transmission resources by using the first sidelink control information in the PSCCH. For a terminal performing the resource selection, the terminal determines a resource selection window and a resource sensing window; performs exclusion on the candidate resources within the resource selection window according to resources indicated by the first sidelink control information (which is sent by other terminals and sensed within the resource sensing window) and/or an non-sensing slot within the resource sensing window; and selects a transmission resource from the remaining candidate resources after the resource exclusion.

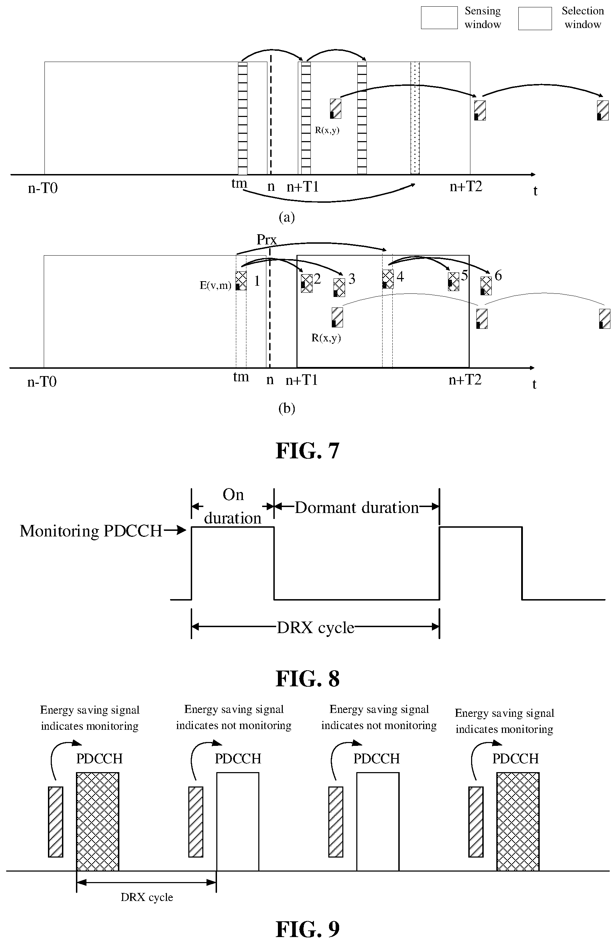

FIG. 7 is an example of resource selection in a second mode according to the present disclosure.

As shown in FIG. 7, the terminal triggers the resource selection or resource reselection in a slot n, or the slot n is a slot where a higher layer triggers a physical layer to report the candidate resource set. The resource selection window starts at n+T1 and ends at n+T2. 0<=T1<=T_{proc,1}, and when a subcarrier spacing is 15 kHz, 30 kHz, 60 kHz, and 120 kHz, T_{proc,1} is 3 slots, 5 slots, 9 slots, and 17 slots, respectively. T2ₘᵢₙ<=T2<=a remaining delay budget of service, and a set of values of T2ₘᵢₙ is {1, 5, 0, 20}*2^{µ} slots, where µ=0, 1, 2, 3 respectively corresponds to the cases where the subcarrier spacing is 15 kHz, 30 kHz, 60 kHz, and 120 kHz. The terminal determines T2ₘᵢₙ from the set of values according to a priority of data to be sent by the terminal itself. For example, when the subcarrier spacing is 15 kHz, the terminal determines T2ₘᵢₙ from the set { 1, 5, 10, 20} according to the priority of data to be sent by the terminal itself. When T2ₘᵢₙ is greater than or equal to the remaining delay budget of service, T2 is equal to the remaining delay budget of service. The remaining delay budget is a difference between a moment corresponding to a data delay requirement and a current moment. For example, for a packet arriving at slot n, the delay requirement is 50 ms. Assuming that a slot is 1 ms, if the current moment is slot n, the remaining delay budget is 50 ms, and if the current time is slot n+20, the remaining delay budget is 30 ms.

The terminal performs resource sensing within an interval from n-T0 to n-T_{proc,0} (not including n-T_{proc,0}), and the value of T0 is 100 ms or 1100 ms. When the subcarrier spacing is 15 kHz, 30 kHz, 60 kHz, and 120 kHz, T_{proc,0} is 1 slot, 1 slot, 2 slots, and 4 slots, respectively. Optionally, the terminal performs the resource sensing in a slot belonging to the resource pool used by the terminal within the sensing window. Optionally, the terminal would sense the first sidelink control information sent by other terminals in each slot (except its own transmission slot). When the resource selection or the resource reselection is triggered at slot n, the terminal uses the results of resource sensing from n-T0 to n-T_{proc,0}.

The procedure of the resource sensing may include a first operation and a second operation.

The first operation is as follows.

The terminal uses the candidate resources within the resource selection window as a resource set A, and any one of the candidate resources in the set A is denoted as R(x, y), where x and y respectively indicate a frequency-domain position and a time-domain position of the resource. For example, x indicates a subchannel from which the resource R(x, y) starts in the frequency domain, y indicates a slot where the resource R(x, y) is located, and R(x, y) indicates continuous L_subchannel subchannels starting from the sub-channel x in the slot t_{y}, where L_subchannel is configured by the higher layer for the physical layer. The initial number of resources in the set A is denoted as Mₜₒₜₐₗ, and a set of slots belonging to the resource pool is denoted as (t₁, t₂, t₃...). The terminal performs the exclusion on the resources in the resource set A according to the non-sensing slot within the resource sensing window and/or a resource sensing result within the resource sensing window.

For the exclusion according to the non-sensing slot, the terminal determines whether the resource R(x, y) or a series of periodic resources corresponding to the resource R(x, y) overlap(s) with slot(s) determined according to the non-sensing slot, and if there is an overlap, the terminal excludes the resource R (x, y) from the resource set A. As shown in (a) of FIG. 7, the slot tm is the non-sensing slot, and slots mapped from the slot tm that are shown as the horizontal line shadows and oblique line shadows are the slots determined according to the non-sensing slot. If these slots overlap with the resource R(x, y) or the series of periodic resources corresponding to the resource R(x, y), the terminal excludes the resource R(x, y) from the resource set A.

For the resource exclusion according to the resource sensing result, the terminal determines whether the resource R(x, y) or the series of periodic resources corresponding to the resource R(x, y) overlap(s) with resource(s) determined according to the sensed first sidelink control information, and determines whether the SL-Reference Signal Received Power (RSRP) determined according to the sensed first sidelink control information is greater than a SL-RSRP threshold. If there is an overlap and the SL-RSRP condition is satisfied, the resource R(x, y) is excluded from the resource set A. As shown in (b) of FIG. 7, the terminal senses the first sidelink control information sent by another terminal in the slot tm, the resources determined according to the first sidelink control information are the resource 1 to resource 6. If the resource 1 to resource 6 overlap with the resource R(x, y) or the series of periodic resources corresponding to the resource R(x, y), and the SL-RSRP determined according to the sensed first sidelink control information is greater than the SL-RSRP threshold, the resource R(x, y) is excluded from the resource set A.

If after the above resource exclusion, the number of the remaining resources in the resource set A is less than Mₜₒₜₐₗ* X, the SL-RSRP threshold is raised by 3dB, the resource set A is initialized, and the first operation is performed again until the number of the remaining resources in the resource set A after the resource exclusion is greater than or equal to Mₜₒₜₐₗ* X. The physical layer uses the resource set A subjected to the resource exclusion as a candidate resource set and reports the candidate resource set to the higher layer. The X is configured by the higher layer of the terminal for the physical layer.

The second operation is as follows.

The higher layer randomly selects resources from the reported candidate resource set to send data. That is to say, the UE randomly selects resources from the candidate resource set to send data.

### (5) Unlicensed spectrum

Unlicensed spectra are spectra divided by countries and regions and may be used for radio device communication. The spectra are usually considered as shared spectra. That is to say, the communication devices in different communication systems may use this spectrum as long as the communication devices satisfy regulatory requirements set by the countries or the regions on this spectrum, without applying for dedicated spectrum license from the government.

For example, the WIFI system is deployed on the unlicensed spectrum.

### (6) LBT

When the NR SL technology operates on the unlicensed spectrum, the terminal needs to perform the LBT. After the LBT is successful, the terminal is able to access the channel for the transmission.

Specific categories of the LBT include type 1, type 2A, type 2B, and type 2C.

For the type 1, a random count is generated. If the monitored slot is idle, the random count is decreased by 1. If the monitored slot is busy, the random count is not decreased. The channel may be accessed for the transmission when the random count is decreased to 0. If the count is decreased to 0 and the communication device has no data for transmission, when the communication device needs to send data, a new count is not required to be re-generated, but only an LBT with a fixed duration is performed. If the LBT is successful, i.e., the channel is idle within the fixed duration, the channel is accessed.

For the type 2A, the communication device may monitor a channel for a length of 25 microseconds (denoted as Tshort). If the channel is idle in all monitored slots within the Tshort, the communication device may directly access the channel.

For the type 2B, the communication device may monitor a channel for a length of 16 microseconds (denoted as Tf). If the monitored slots within the Tf are all idle, the communication device may directly access the channel.

For the type 2C, the communication device may directly access the channel without the LBT. This type may only be applied the case where the length of the gap between the current transmission and the last transmission is less than or equal to 16 microseconds (µs). In addition, the length of the current transmission does not exceed 584 µs.

### (7) DRX mechanism of the UU interface

In the wireless network, the UE monitors the PDCCH all the time and sends/receives data according to an indication message sent by the network side, which leads to relatively large power consumption of the UE and large data transmission delay. Therefore, the 3GPP standard protocol begins to introduce the DRX energy saving strategy into the LTE system.

FIG. 8 is an example of a DRX according to the present disclosure.

As shown in FIG. 8, the basic mechanism of the DRX is that the DRX cycle is configured for the UE. The DRX cycle consists of the on duration and the dormant duration (opportunity for DRX). The UE monitors and receives the PDCCH in the on duration; and UE does not receive the PDCCH in the dormancy duration to reduce the power consumption.

In the DRX operation, the terminal controls the terminal to be in the active state or the dormant state according to some timer parameters configured by the network.

For example, the length of the "on duration" may be indicated by a parameter drx-onDurationTimer, and a starting position of the DRX cycle may be indicated by drx-LongCycleStartOffset and drx-SlotOffset. According to the above parameters, the terminal starts a timer having a length of the value indicated by the parameter drx-onDurationTimer at the starting position of the DRX cycle, and maintains to be in the active state until the timer is decreased to 0.

When the terminal is in the "on duration" (i.e., before the on duration timer is decreased to 0), if the terminal detects the PDCCH, the terminal may start timers, such as an inactivity timer and a re-transmission timer, to prolong the duration of the active state for receiving scheduled data or for the repetition.

### (8) Wake up signal (WUS) in the NR system

[The traditional terminal energy saving mechanism is mainly the DRX. When the DRX is configured, the terminal monitors the PDCCH in the DRX on duration, and if the data scheduling is received in the on duration, the terminal continuously monitors the PDCCH based on the control of the DRX timer until the data transmission is completed; otherwise, if the terminal does not receive the data scheduling in the DRX on duration, the terminal enters the dormant state to implement the energy saving. Therefore, the DRX is an energy saving control mechanism with the DRX cycle as the time granularity, which thus cannot implement the optimal power consumption control. For example, even if the terminal does not have the data scheduling, the terminal has to monitor the PDCCH during the running of the DRX on duration timer that is started periodically, so there is still power waste.

In order to achieve further energy saving of the terminal, the wake up signal is introduced into the NR energy saving enhancement. The standardized wake up signal is used in conjunction with the DRX mechanism. The specific technical principle is that the terminal receives an indication of a wake up signal before the DRX on duration.

FIG. 9 is an example of an energy saving signal according to the present disclosure.

As shown in FIG. 9, when the terminal has data for transmission in one DRX cycle, for example, the base station schedules the downlink transmission to the terminal, and the terminal is "woken up" by using the wake up signal to monitor the PDCCH in the DRX on duration. Conversely, when the terminal has no data for transmission in one DRX cycle, the terminal is not "woken up" by using the wake up signal, and the terminal does not need to monitor the PDCCH in the DRX on duration. Compared with the existing DRX mechanism, the terminal's monitoring of the PDCCH in the DRX on duration may be omitted when the terminal has no data for transmission, thereby realizing the energy saving.

### (9) A energy saving signal based on the PDCCH

The energy saving signal may be a sequence-based signal or a PDCCH channel-based signal. Bearing the energy saving indication information by the PDCCH channel has some advantages. Therefore, using the PDCCH as the energy saving signal in the NR system has the following advantages.
1. The existing PDCCH design may be directly reused, including encoding, scrambling, resource mapping, a search space, a Control Resource Set (CORESET), etc. Therefore, the workload of standardization is small.
2. It has good compatibility and reusability with transmissions of other signals. Since the PDCCH channel has already been supported in the existing system, the PDCCH has good compatibility and reusability with other channels, such as the PDSCH and the like.

The SL DRX has been introduced in the SL version of the R17, but the SL WUS is not introduced for further energy saving. In the SL version of R18, the base version of SL-U, i.e., the SL system operating in the unlicensed frequency bands, is being discussed. However, when the energy saving and power saving mechanism is designed for the SL-U system, in addition to reusing the existing SL DRX mechanism, it is very likely to introduce the SL WUS. Therefore, how the SL WUS operates in the SL-U system is a technical problem required to be solved urgently in the art. For example, in the SL-U, there may be a problem that the WUS cannot be sent/received due to the LBT failure, a problem how the WUS is sent/received, and a problem how the data is sent/received, etc. In view of this, the present disclosure provides methods for wireless communication, first terminal devices and second terminal devices, which can not only reduce the energy consumption of the terminal, but also ensure the reliability of the sidelink transmission.

Hereinafter, the method for wireless communication provided by the present disclosure is exemplarily described.

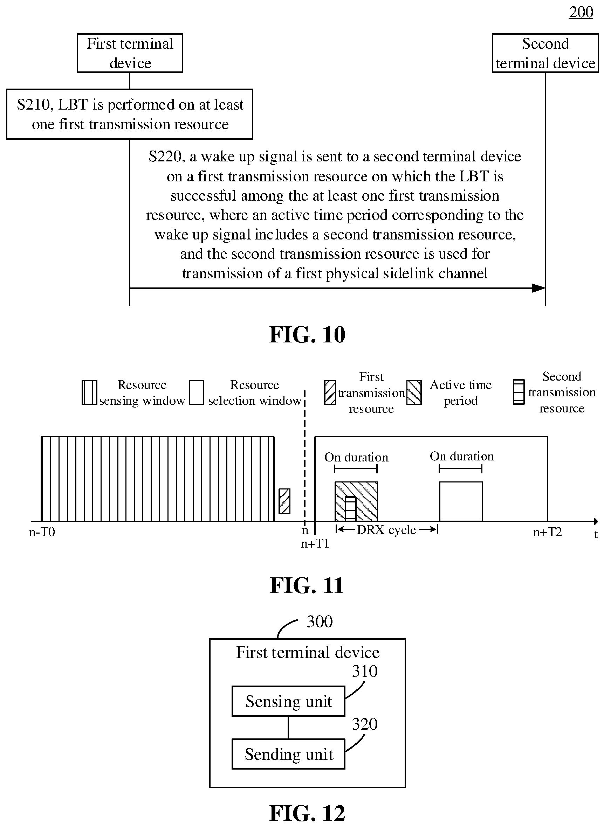

FIG. 10 is a schematic flowchart of a method 200 for wireless communication according to an embodiment of the present disclosure. The method 200 for wireless communication may be interactively performed by the first terminal device and the second terminal device. The first terminal device and/or the second terminal device shown in FIG. 2 may be any one of the terminal devices capable of performing the sidelink communication. For example, the first terminal device and/or the second terminal device shown in FIG. 2 may be the terminals shown in FIG. 1 to FIG. 5.

As shown in FIG. 2, the method 200 may include a part or all of the following contents.

In operation S210, the first terminal device performs LBT on at least one first transmission resource.

Exemplarily, the at least one first transmission resource may be one first transmission resource or multiple first transmission resources.

Exemplarily, the first terminal device performs the LBT on the at least one first transmission resource, which may be understood as or equivalently replaced with: the first terminal device performs the LBT on each of the at least one first transmission resource, or the first terminal device performs the LBT before each of the at least one first transmission resource, or the first terminal device performs the LBT on a resource preceding each of the at least one first transmission resource.

Exemplarily, when the first terminal device operates on the unlicensed spectrum, the first terminal device performs the LBT on the at least one first transmission resource, and the type of the LBT may be any of the type 1, the type 2 and the type 3.

For the type 1, a random count is generated. If the monitored slot is idle, the random count is decreased by 1. If the monitored slot is busy, the random count is not decreased. The channel may be accessed for the transmission when the random count is decreased to 0. If the count is decreased to 0 and the communication device has no data for transmission, when the communication device needs to send data, a new count is not required to be re-generated, but only an LBT with a fixed duration is performed. If the LBT is successful, i.e., the channel is idle within the fixed duration, the channel is accessed.

For the type 2A, the communication device may monitor a channel for a length of 25 microseconds (denoted as Tshort). If the monitored slots within the Tshort are all idle, the communication device may directly access the channel.

For the type 2B, the communication device may monitor a channel for a length of 16 microseconds (denoted as Tf). If the monitored slots within the Tf are all idle, the communication device may directly access the channel.

For the type 2C, the communication device may directly access the channel without the LBT. This type may only be applied the case where the length of the gap between the current transmission and the last transmission is less than or equal to 16 µs. In addition, the length of the current transmission does not exceed 584 µs.

In operation S220, the first terminal device sends a wake up signal to a second terminal device on a first transmission resource on which the LBT is successful among the at least one first transmission resource, where an active time period corresponding to the wake up signal includes a second transmission resource, and the second transmission resource is used for transmission of a first physical sidelink channel. Accordingly, the second terminal device detects (e.g., blindly detects) the wake up signal in the resource pool. The resource pool may be configured by the network or may be preconfigured.

Exemplarily, if the at least one first transmission resource includes multiple first transmission resources, the first terminal device performs the LBT before each first transmission resource. If the LBT is successful, the first terminal device sends the wake up signal on the corresponding first transmission resource. For example, the first terminal device performs the LBT before each of a resource 1, a resource 2 and a resource 3, and when the LBT before the resource 1 is successful, the first terminal device sends the wake up signal on the resource 1; and similarly, when the LBT before the resource 2 or the resource 3 is successful, the first terminal device sends the wake up signal on the resource 2 or the resource 3.

Exemplarily, the active time period refers to a time period activated by the wake up signal.

Exemplarily, when the at least one first transmission resource includes multiple first transmission resources, the first terminal device sends at least one wake up signal to the second terminal device on at least one first transmission resource on which the LBT is successful among the multiple first transmission resources. In this case, an active time period corresponding to the at least one wake up signal includes a second transmission resource, and the second transmission resource is used for the transmission of the first physical sidelink channel. Herein, different wake up channels in the at least one wake up signal may correspond to (e.g., activate) the same time period, or may correspond to (e.g., activate) different time periods, which is not specifically limited in the present disclosure.

Exemplarily, the active time period refers to a time period during which a peer terminal (including the second terminal device) of the first terminal device is able to receive the physical sidelink channel (e.g., the PSCCH and/or PSSCH). In other words, if the peer terminal of the first terminal device receives the wake up signal, the physical sidelink channel is detected during the active time period; and otherwise, the physical sidelink channel is not detected during the active time period.

Exemplarily, the active time period corresponding to the wake up signal includes one or more second transmission resources, and the one or more second transmission resources are used for the transmission of the first physical sidelink channel.

Exemplarily, the second transmission resource is used for the transmission of a Transmission Block (TB) beard on the first physical sidelink channel.

For example, the second transmission resource is used for the initial transmission of the TB, or in other words, the second transmission resource is used for the first time of transmission of the TB.

In the embodiment, based on the introduction of the wake up signal, the second transmission resource for the transmission of the first physical sidelink channel is associated with the active time period corresponding to the wake up signal, so that the wake up signal can be combined with the sidelink grant-free system, thereby not only reducing the energy consumption of the second terminal device, but also ensuring the reliability of the transmission of the first physical sidelink channel. In addition, the first terminal device sends the wake up signal to the second terminal device on the first transmission resource on which the LBT is successful among the at least one first transmission resource, and when the at least one first transmission resource includes multiple transmission resources, the reliability of the transmission of the wake up signal can be ensured, and accordingly, the reliability of the transmission of the first physical sidelink channel can be improved.

In some embodiments, the method 200 may further include a following operation.

The first terminal device sends the first physical sidelink channel to the second terminal device on the second transmission resource. Accordingly, the second terminal device detects (e.g., the blindly detects) the first physical sidelink channel in the resource pool. The resource pool may be configured by the network or may be preconfigured.

Exemplarily, if the first terminal device has data or information required to be sent to the second terminal device, the first terminal device sends the first physical sidelink channel to the second terminal device on the second transmission resource. The first physical sidelink channel bears the data or information required to be sent by the first terminal device to the second terminal device.

In some embodiments, after operation S220, the method 200 may further include a following operation.

The first terminal device determines the second transmission resource.

Exemplarily, the second transmission resource is determined after the LBT performed by the first terminal device on a part or all of the at least one first transmission resource is successful and/or after the first terminal device sends the wake up signal to the second terminal device. For example, the first terminal device determines the second transmission resource within an active time period corresponding to the wake up signal.

Exemplarily, the first terminal device may firstly determine at least one first transmission resource; then perform the LBT on the at least one first transmission resource; and send the wake up signal to the second terminal device on the first transmission resource on which the LBT is successful among the at least one first transmission resource. Then, the first terminal device determines the second transmission resource within the active time period corresponding to the wake up signal.

Of course, if the LBT performed by the first terminal device on each of the at least one first transmission resource is failed, the first terminal device may re-determine at least one first transmission resource and perform the LBT on the re-determined at least one first transmission resource until the LBT performed by the first terminal device on a part or all of the re-determined at least one first transmission resource is successful. The first terminal device sends the wake up signal to the second terminal device on the first transmission resource on which the LBT is successful among the re-determined at least one first transmission resource. Then, the first terminal device determines the second transmission resource within the active time period corresponding to the wake up signal.

In the embodiment, the first terminal device determines the second transmission resource after the wake up signal is sent, which can ensure the validity of the second transmission resource, thereby not only solving the problem of the LBT failure on the unlicensed spectrum, but also enabling the WUS+DRX mechanism to operate on the SL-U system, thus saving the energy consumption of the second terminal device.

In some embodiments, before operation S210, the method 200 may further include a following operation.

The first terminal device determines the second transmission resource.

Exemplarily, the first terminal device determines the second transmission resource before the LBT is performed on the at least one first transmission resource. For example, the first terminal device determines the second transmission resource within an active time period corresponding to the wake up signal transmitted on the at least one first transmission resource.

Exemplarily, the first terminal device firstly determines at least one first transmission resource, and determines the second transmission resource within the active time period corresponding to the wake up signal transmitted on the at least one first transmission resource; and then performs the LBT on the at least one first transmission resource. Then, the first terminal device sends the wake up signal to the second terminal device on the first transmission resource on which the LBT is successful among the at least one first transmission resource.

In some embodiments, the method 200 may further include a following operation.

The first terminal device discards or re-determines the second transmission resource if the LBT performed on each of the at least one first transmission resource is failed.

Exemplarily, the first terminal device firstly determines at least one first transmission resource; determines the second transmission resource within the active time period corresponding to the wake up signal transmitted on the at least one first transmission resource; and then performs the LBT on the at least one first transmission resource. The first terminal device discards or re-determines the second transmission resource if the LBT performed on each of the at least one first transmission resource is failed. For example, the first terminal device may re-determine at least one first transmission resource if the LBT performed by the first terminal device on each of the at least one first transmission resource is failed; and re-determine the second transmission resource within the active time period corresponding to the wake up signal transmitted on the re-determined at least one first transmission resource. Then, the first terminal device performs the LBT on the re-determined at least one first transmission resource until the LBT performed by the first terminal device on a part or all of the re-determined at least one first transmission resource is successful, and the first terminal device sends the wake up signal to the second terminal device on a first transmission resource on which the LBT is successful among the re-determined at least one first transmission resource.

In the embodiment, when the first terminal device firstly determines the second transmission resource and then performs the LBT on the first transmission resource, if the wake up signal is not successfully sent due to the LBT failure, the first terminal device discards or re-determines the second transmission resource, which can not only solve the problem of the LBT failure on the unlicensed spectrum, but also enable the WUS+DRX mechanism to operate on the SL-U system, thus saving the energy consumption of the second terminal device.

In some embodiments, the first terminal device determines the second transmission resource based on scheduling information or configuration information sent by a network device.

Exemplarily, after the LBT performed by the first terminal device on a part or all of the at least one first transmission resource is successful and/or after the first terminal device sends the wake up signal to the second terminal device, the first terminal device receives the scheduling information or the configuration information sent by the network device, and determines the second transmission resource within the active time period corresponding to the wake up signal based on the scheduling information or the configuration information sent by the network device.

Exemplarily, before the first terminal device performs the LBT on the at least one first transmission resource, the first terminal device receives the scheduling information or the configuration information sent by the network device; and determines, based on the scheduling information or the configuration information sent by the network device, the second transmission resource within the active time period corresponding to the wake up signal transmitted on the at least one first transmission resource.

Exemplarily, the scheduling information may be Downlink Control Information (DCI) or other information.

Exemplarily, the configuration information may be a Media Access Control (MAC) Control Element (CE) or other information.

For example, the second transmission resource scheduled by the scheduling information for the first terminal device is a sidelink grant-free resource.

For example, the second transmission resource configured by the scheduling information for the first terminal device is a sidelink grant-free resource.

Exemplarily, the scheduling information or the configuration information may include at least one of:
starting position information of the second transmission resource in the time domain, ending position information of the second transmission resource in the time domain, the length of the second transmission resource in the time domain, position information of the second transmission resource in the time domain, starting position information of the second transmission resource in the frequency domain, ending position information of the second transmission resource in the frequency domain, the length of the second transmission resource in the frequency domain, or position information of the second transmission resource in the frequency domain.

Exemplarily, the scheduling information or the configuration information may include: a time-domain range of the second transmission resource and/or a frequency-domain range of the second transmission resource.

For example, when the scheduling information or the configuration information includes the time-domain range of the second transmission resource, the first terminal device determines the time-domain position of the second transmission resource within the time-domain range. For example, the first terminal device randomly determines the time-domain position of the second transmission resource within the time-domain range. For another example, the first terminal device determines, based on an identifier or other information of the first terminal device, the time-domain position of the second transmission resource within the time-domain range. Similarly, when the scheduling information or the configuration information includes the frequency-domain range of the second transmission resource, the first terminal device determines the frequency-domain position of the second transmission resource within the frequency-domain range. For example, the first terminal device randomly determines the frequency-domain position of the second transmission resource within the frequency-domain range. For another example, the first terminal device determines, based on the identifier or other information of the first terminal device, the frequency-domain position of the second transmission resource within the frequency-domain range.

In some embodiments, the method 200 may further include a following operation.

The first terminal device sends first information to the network device.

Herein, the first information is used for requesting the network device to schedule or configure the second transmission resource for the first terminal device.

Exemplarily, the first information is specifically used for indicating that the first terminal device has sent the wake up signal to the second terminal device. In this case, after the network device receives the first information, in response to the first information, the network device sends information for scheduling or configuring the second transmission resource to the first terminal device. In other words, the first terminal device may request the network device to schedule or configure the second transmission resource for the first terminal device through sending, to the network device, first information used for indicating that the first terminal device has sent the wake up signal to the second terminal device.

It is to be understood that after the network device receives the first information, the network device may send the information for scheduling or configuring the second transmission resource for the first terminal device in response to the first information, and the first information may be used for requesting the network device to schedule or configure the second transmission resource for the first terminal device through indicating that the first terminal device has sent the wake up signal to the second terminal device. Therefore, in the embodiment, "the first information is used for requesting the network device to schedule or configure the second transmission resource for the first terminal device" may be understood as or equivalently replaced with "the first information is used for indicating that the first terminal device has sent the wake up signal to the second terminal device and/or the first information is used for requesting the network device to schedule or configure the second transmission resource for the first terminal device", which is not specifically limited in the present disclosure.

Exemplarily, if the second transmission resource is determined after the LBT performed by the first terminal device on a part or all of the at least one first transmission resource is successful and/or after the first terminal device sends the wake up signal to the second terminal device, the first terminal device may send the first information to the network device after the LBT performed by the first terminal device on the part or all of the at least one first transmission resource is successful and/or after the first terminal device sends the wake up signal to the second terminal device; and determine the second transmission resource based on the scheduling information or the configuration information sent by the network device in response to the first information.

Exemplarily, if the first terminal device determines the second transmission resource before the LBT is performed on the at least one first transmission resource, the first terminal device sends the first information to the network device before the LBT is performed on at least one first transmission resource; and determine the second transmission resource based on the scheduling information or the configuration information sent by the network device in response to the first information.

In some embodiments, the first information is single-bit information, or the first information is sequence-based information.

Of course, in other alternative embodiments, the first information may also be multiple-bit information, which is not limited in the present disclosure.

Exemplarily, when a value of the single bit is a first value, it indicates that the first terminal device has sent the wake up signal to the second terminal device and/or the first terminal device requests the network device to schedule or configure the second transmission resource. The first value may be 0 or 1.

Exemplarily, the first value may be predefined, indicated by the network device, or determined by the first terminal device.

For example, when the first value is the predefined value, the first terminal device may acquire the first value from information stored in the first terminal device. When the first value is the value indicated by the network device, the first terminal device may receive information indicating the first value sent by the network device before sending the first information to the network device. When the first value is information determined by the first terminal device, the first terminal device may determine the first value among multiple predefined values. For example, the first terminal device may determine, according to a predefined rule, the first value among the multiple values based on the identifier or other information of the first terminal device. Of course, in other alternative embodiments, the first value may be determined by the negotiation between the first terminal device and the network device or may be depended on the terminal implementation, which is not limited in the present disclosure.

Exemplarily, when the first information includes information based on a certain sequence (e.g., denoted as a first sequence), the first information indicates that the first terminal device has sent the wake up signal to the second terminal device and/or the first terminal device requests the network device to schedule or configure the second transmission resource.

Exemplarily, the first sequence may be predefined, indicated by the network device, or determined by the first terminal device.

For example, when the first sequence is the predefined sequence, the first terminal device may acquire the first sequence from information stored in the first terminal device. When the first sequence is the sequence indicated by the network device, the first terminal device may receive information indicating the first sequence sent by the network device before sending the first information to the network device. When the first sequence is information determined by the first terminal device, the first terminal device may determine the first sequence among multiple predefined sequences. For example, the first terminal device may determine, according to a predefined rule, the first sequence among the multiple sequences based on the identifier or other information of the first terminal device. Of course, in other alternative embodiments, the first sequence may be determined by the negotiation between the first terminal device and the network device or may be depended on the terminal implementation, which is not limited in the present disclosure.

Exemplarily, the network device receives the first information, which indicates by default that the first terminal device has sent the wake up signal to the second terminal device and/or the first terminal device requests the network device to schedule or configure the second transmission resource.

In some embodiments, the first information is carried in a Scheduling Request (SR) and/or a Buffer Status Report (BSR).

For example, the information for requesting the network device to schedule or configure the transmission resource in the SR may include only the first information, or may include information for requesting the network device to schedule or configure other resources other than the second transmission resource.

Exemplarily, the BSR may be a periodic BSR or an aperiodic BSR.

Of course, in other alternative embodiments, the first information may also be carried in Uplink Control Information (UCI) or other uplink information, which is not limited in the present disclosure.

In some embodiments, the first information is beard by a PUCCH and/or a Physical Uplink Shared Channel (PUSCH).

Of course, in other alternative embodiments, the first information may also be beard by a Physical Random Access Channel (PRACH) or other physical uplink channels, which is not specifically limited in the present disclosure.

In some embodiments, the first terminal device determines the second transmission resource within the active time period by means of resource sensing.

Exemplarily, after the LBT performed by the first terminal device on the part or all of the at least one first transmission resource is successful and/or after the first terminal device sends the wake up signal to the second terminal device, the first terminal device determines the second transmission resource within the active time period corresponding to the wake up signal by means of resource sensing.

Exemplarily, before the first terminal device performs the LBT on the at least one first transmission resource, the first terminal device determines, by means of resource sensing, the second transmission resource within the active time period corresponding to the wake up signal transmitted on the at least one first transmission resource.

In some embodiments, the first terminal device determines the second transmission resource in a following manner.

A resource selection window and a resource sensing window are determined; a resource set is initialized, where the resource set includes candidate resources within the resource selection window; resource exclusion is performed on the candidate resources in the resource set based on sidelink control information sensed within the resource sensing window and/or an non-sensing time unit, to obtain a resource set subjected to the resource exclusion; and if the resource set subjected to the resource exclusion has candidate resources located within the active time period, the second transmission resource is determined among the candidate resources located within the active time period in the resource set subjected to the resource exclusion.

Exemplarily, the sidelink control information sensed within the resource sensing window may be the first sidelink control information involved in the foregoing.

Exemplarily, the physical layer of the first terminal device firstly determines the resource selection window and the resource sensing window; initializes the resource set, where the resource set includes the candidate resources within the resource selection window. Then the physical layer of the first terminal device performs the resource exclusion on the candidate resources in the resource set based on the sidelink control information sensed within the resource sensing window and/or the non-sensing time unit, to obtain the resource set subjected to the resource exclusion; and if the resource set subjected to the resource exclusion has candidate resources located within the active time period, the physical layer of the first terminal device reports the resource set subjected to the resource exclusion to a higher layer of the first terminal device; and the higher layer of the first terminal device determines the second transmission resource among the candidate resources located within the active time period in the resource set subjected to the resource exclusion. The higher layer of the first terminal device may include a protocol layer above the physical layer. For example, the higher layer of the first terminal device may be the MAC layer or other protocol layer.

In some embodiments, the method 200 may further include a following operation.

if the resource set subjected to the resource exclusion does not have candidate resources located within the active time period, after the first terminal device selects at least one candidate resource located within the active time period and adds the selected at least one candidate resource into the resource set subjected to the resource exclusion, the first terminal device determines the second transmission resource among the candidate resources located within the active time period in the resource set subjected to the resource exclusion.

Exemplarily, if the resource set subjected to the resource exclusion does not have candidate resources located within the active time period, after selecting at least one candidate resource located within the active time period and adding the selected at least one candidate resource into the resource set subjected to the resource exclusion, the physical layer of the first terminal device reports the resource set subjected to the resource exclusion (i.e., the resource set including the at least one candidate resource) to the higher layer of the first terminal device, so that the higher layer of the first terminal device determines the second transmission resource among the candidate resources (i.e., the at least one candidate resource) located within the active time period in the resource set subjected to the resource exclusion. In other words, if the resource set, which is obtained after the physical layer of the first terminal device selects the at least one candidate resource located within the active time period and adds the selected at least one candidate resource into the resource set subjected to the resource exclusion, is denoted as the resource set subjected to the resource addition, the physical layer of the first terminal device reports the resource set subjected to the resource addition to the higher layer of the first terminal device, so that the higher layer of the first terminal device determines the second transmission resource among the candidate resources located within the active time period in the resource set subjected to the resource addition.

Exemplarily, the number of the at least one candidate resource may be predefined, indicated by the network device, or determined by the first terminal device.

For example, when the number of the at least one candidate resource is a predefined value, the first terminal device may acquire the number of the at least one candidate resource from the information stored in the first terminal device. When the number of the at least one candidate resource is a value indicated by the network device, the first terminal device may receive information indicating the number of the at least one candidate resource sent by the network device after the wake up signal is sent to the second terminal device or before the LBT is performed on the at least one first transmission resource for sending the wake up signal. When the number of the at least one candidate resource is a value determined by the first terminal device, the first terminal device may determine the number of the at least one candidate resource among multiple predefined multiple candidate resources. For example, the first terminal device may determine, according to a predefined rule, the number of the at least one candidate resource among the multiple candidate resources based on the identifier or other information of the first terminal device. Of course, in other alternative embodiments, the number of the at least one candidate resource may be determined by the negotiation between the first terminal device and the network device or may be depended on the terminal implementation, which is not limited in the present disclosure.

Exemplarily, the number of the at least one candidate resource may be 1 or a value greater than 1.

Exemplarily, if the resource set subjected to the resource exclusion does not have candidate resources located within the active time period, after the first terminal device selects Y candidate resources located within the active time period and adds the Y candidate resources into the resource set subjected to the resource exclusion, the first terminal device determines the second transmission resource among the candidate resources (i.e., the Y candidate resources) located within the active time period in the resource set subjected to the resource exclusion. Herein, Y may be predefined, indicated by the network device, or determined by the first terminal device.

In some embodiments, the first terminal device determines a resource randomly selected within the active time period as the second transmission resource.

Exemplarily, after the LBT performed by the first terminal device on the part or all of the at least one first transmission resource is successful and/or after the first terminal device sends the wake up signal to the second terminal device, the first terminal device determines the resource randomly selected within the active time period corresponding to the wake up signal as the second transmission resource.

Exemplarily, before the first terminal device performs the LBT on the at least one first transmission resource, the first terminal device determines the resource randomly selected within the active time period corresponding to the wake up signal transmitted on the at least one first transmission resource as the second transmission resource.

Exemplarily, the higher layer of the first terminal device determines the resource randomly selected within the active time period as the second transmission resource. The higher layer of the first terminal device may include the protocol layer above the physical layer.

Of course, in other alternative embodiments, the first terminal device may also determine the second transmission resource within the active time period based on assistant information. The assistant information includes, but is not limited to, information such as the identifier of the first terminal device, an identifier of a device group to which the first terminal device belongs, and the number of resource units within the active time period.

It is worth to be noted that when the first terminal device determines the second transmission resource before the LBT is performed on the at least one first transmission resource, the second transmission resource may be required to be re-determined. In the embodiment, the manner of initially determining the second transmission resource may be the same as or different from and the manner of re-determining the second transmission resource. For example, if the LBT performed on each of the at least one first transmission resource is failed, the first terminal device may re-determine the second transmission resource based on the scheduling information or the configuration information re-sent by the network device. For another example, if the LBT performed on each of the at least one first transmission resource is failed, the first terminal device triggers the resource reselection and re-determines the second transmission resource. For example, the reselection is performed based on the resource sensing or based on the random selection, which will not be repeated herein in order to avoid repetition.

In some embodiments, the active time period includes multiple time periods that are continuous or discontinuous in time domain.

In other words, the active time period may be continuous or may be discontinuous in time domain.

Exemplarily, each time period of the multiple time periods may comprise at least one time unit that is continuous. The time unit includes, but is not limited to, a frame, a subframe, a slot, a symbol, and the like.

In some embodiments, the active time period includes on durations of one or more DRX cycles.

Exemplarily, the active time period may be determined according to DRX configurations of the first terminal device and/or a peer terminal (including the second terminal device) of the first terminal device. For example, the network device may indicate the length of the "on duration" through the parameter drx-onDurationTimer, and indicate the starting position of the DRX cycle through the drx-CycleStartOffset and drx-SlotOffset. According to the above parameters, the first terminal device and/or the peer terminal (including the second terminal device) of the first terminal device starts a timer having the length of the value indicated by the parameter drx-onDurationTimer at the starting position of the DRX cycle, and maintains to be in the active state until the timer is decreased to 0.

Exemplarily, the active time period includes on durations of one or more DRX cycles after the wake up signal.

Exemplarily, the active time period includes on durations of one or more DRX cycles that are spaced apart by a first duration following the wake up signal. The first duration may be predefined, indicated by the network device, or determined by the first terminal device.

Exemplarily, the DRX cycle may be a cycle of the DRX of the second terminal device.

In some embodiments, the active time period includes an on duration of a latest DRX cycle corresponding to the wake up signal.

Exemplarily, the latest DRX cycle corresponding to the wake up signal may be an on duration of a first DRX cycle after the wake up signal.

In some embodiments, the first transmission resource is scheduled or configured by the network device.

Exemplarily, the at least one first transmission resource is scheduled or configured by the network device.

Exemplarily, the first transmission resource may be a resource scheduled by the network device through the DCI or other information. Alternatively, the first transmission resource may be a resource configured by the network device through the MAC CE or other information.

Exemplarily, the first transmission resource is a sidelink grant-free resource scheduled or configured by the network device.

Exemplarily, the first transmission resource is determined by the information configured or scheduled by the network device, and the information configured or scheduled by the network device may include at least one of the following:
starting position information of the first transmission resource in the time domain, ending position information of the first transmission resource in the time domain, the length of the first transmission resource in the time domain, position information of the first transmission resource in the time domain, starting position information of the first transmission resource in the frequency domain, ending position information of the first transmission resource in the frequency domain, the length of the first transmission resource in the frequency domain, or position information of the first transmission resource in the frequency domain.

Exemplarily, the first transmission resource is determined by the information configured or scheduled by the network device, and the information configured or scheduled by the network device may include: a time-domain range of the first transmission resource and/or a frequency-domain range of the first transmission resource.

For example, when the information configured or scheduled by the network device includes the time-domain range of the first transmission resource, the first terminal device determines the time-domain position of the first transmission resource within the time-domain range. For example, the first terminal device randomly determines the time-domain position of the first transmission resource within the time-domain range. For another example, the first terminal device determines, based on the identifier or other information of the first terminal device, the time-domain position of the first transmission resource within the time-domain range. Similarly, when the information configured or scheduled by the network device includes the frequency-domain range of the first transmission resource, the first terminal device determines the frequency-domain position of the first transmission resource within the frequency-domain range. For example, the first terminal device randomly determines the frequency-domain position of the first transmission resource within the frequency-domain range. For another example, the first terminal device determines, based on the identifier or other information of the first terminal device, the frequency-domain position of the first transmission resource within the frequency-domain range.

In some embodiments, the first transmission resource is a resource determined by the first terminal device.

Exemplarily, the at least one first transmission resource is a resource randomly determined by the first terminal device.

Exemplarily, the at least one first transmission resource is a resource determined by the first terminal device by means of resource sensing.

For example, the physical layer of the first terminal device firstly determines the resource selection window and the resource sensing window; and initializes the resource set, where the resource set includes the candidate resources within the resource selection window. Then, the physical layer of the first terminal device performs the resource exclusion on the candidate resources in the resource set based on the sidelink control information sensed (e.g., the first control information involved in the foregoing) within the resource sensing window and/or the non-sensing time unit, to obtain the resource set subjected to the resource exclusion; and reports the resource set subjected to the resource exclusion to the higher layer of the first terminal device. The higher layer of the first terminal device determines the first transmission resource in the resource set subjected to the resource exclusion. For example, the higher layer of the first terminal device randomly determines the first transmission resource in the resource set subjected to the resource exclusion. The higher layer of the first terminal device may include the protocol layer above the physical layer. For example, the higher layer of the first terminal device may be the MAC layer or other protocol layer.

In some embodiments, the first transmission resource includes at least one of: a Physical Sidelink Feedback Channel (PSFCH) resource, a PSCCH resource, or a PSSCH resource.

Of course, in other alternative embodiments, the first transmission resource may also be: the PRACH, a Physical Sidelink Triggering Channel (PSTCH) or other physical uplink channels, which is not specifically limited in the present disclosure.

In some embodiments, the wake up signal is a sequence-based signal.

In some embodiments, the wake up signal is sidelink control information.

Exemplarily, the wake up signal may be the first sidelink control information involved in the foregoing, or the second control information involved in the foregoing.

In some embodiments, the wake up signal is the MAC CE.

In some embodiments, the wake up signal is PC5-RRC signaling.

Exemplarily, the PC5 is a communication interface between terminals.

Of course, in other alternative embodiments, the wake up signal may be other types of signals or information, which is not limited in the present disclosure.

In some embodiments, the wake up signal is beard by at least one of: the PSFCH, the PSCCH, or the PSSCH.

Of course, in other alternative embodiments, the wake up signal may also be beard by the PRACH, the PSTCH, or another physical sidelink channel, which is not specifically limited in the present disclosure.

In some embodiments, the first physical sidelink channel includes the PSCCH and/or the PSSCH.

Of course, in other alternative embodiments, the first physical sidelink channel may be the PSFCH, the PRACH, the PSTCH, or another physical sidelink channel, which is not specifically limited in the present disclosure.

FIG. 11 is another example of a method for wireless communication according to an embodiment of the present disclosure.

As shown in FIG. 11, the first transmission resource of the first terminal device is scheduled or configured by the network device, or determined by the first terminal device. The first transmission resource is the PSFCH resource, the PSCCH resource, or the PSSCH resource. The first transmission resource is used by the first terminal device for transmission of the wake up signal. The wake up signal is the sequence-based signal, sidelink control information (e.g. the first sidelink control information or the second sidelink control information involved in the foregoing), the MAC CE or the PC5-RRC signaling. The first terminal device performs the LBT before first transmission resource(s), and the LBT type is the type 1, type 2A, type 2B or type 2C. If the LBT is successful, the first terminal device sends the wake up signal on a first transmission resource on which the LBT is successful, and the wake up signal corresponds to an active time period. For example, the active time period is the on duration of the latest DRX cycle corresponding to the wake up signal. The DRX cycle and the on duration may be determined according to the DRX configuration of the first terminal device and/or a receiving terminal (e.g., the second terminal device) of the first terminal device. When the first terminal device successfully sends the wake up signal on the first transmission resource, if the receiving terminal successfully receives the wake up signal, the receiving terminal may detect the first physical sidelink channel (e.g., the PSCCH and/or the PSSCH) within the active time period corresponding to the wake up signal (e.g., the on duration of the latest DRX cycle corresponding to the wake up signal); otherwise, the receiving terminal may not detect the first physical sidelink channel during the active time period.

Exemplarily, depending on the sequence of determining the second transmission resource and performing the LBT, the first terminal device may determine the second transmission resource in any of the following first manner and the second manner.

### First manner

After the transmission of the wake up signal by the first terminal device is successful on the first transmission resource, the first terminal device determines the second transmission resource. For example, after the transmission of the wake up signal is successful on the first transmission resource, the first terminal device determines the second transmission resource within the active time period corresponding to the wake up signal. The second transmission resource is used for the transmission of the first physical sidelink channel (e.g., the PSCCH and/or the PSSCH). The second transmission resource is used for the initial transmission of one TB.

In the embodiment, the first terminal device determines the second transmission resource after the wake up signal is sent, which can ensure the validity of the second transmission resource, thereby not only solving the problem of the LBT failure on the unlicensed spectrum, but also enabling the WUS+DRX mechanism to operate on the SL-U system, thus saving the energy consumption of the second terminal device.

### Second manner

The first terminal device determines the second transmission resource before the LBT is performed on the first transmission resource. For example, the first terminal device determines the second transmission resource within the active time period corresponding to the wake up signal transmitted on the first transmission resource. The second transmission resource is used for the transmission of the first physical sidelink channel (e.g., the PSCCH and/or the PSSCH). The second transmission resource is used for the initial transmission of one TB.

Since the second transmission resource is determined before the first terminal device performs the LBT on the first transmission resource, if the LBT performed by the first terminal device before the first transmission resource is successful, the first terminal device may normally send the wake up signal on the first transmission resource, i.e., the second transmission resource can be used for the transmission of the first physical sidelink channel. If the LBT performed by the first terminal device before the first transmission resource is failed, the first terminal device discards the second transmission resource, or the first terminal device may re-determine the second transmission resource. For example, the first terminal device may send, to the network device, information for requesting the network device to reconfigure or reschedule the second transmission resource for the first terminal device. For another example, the first terminal device may trigger the resource reselection and reselect the second transmission resource by means of resource sensing or the random selection.

In the embodiment, when the first terminal device firstly determines the second transmission resource and then performs the LBT on the first transmission resource, if the wake up signal is not successfully sent due to the LBT failure, the first terminal device discards or re-determines the second transmission resource, which can not only solve the problem of the LBT failure on the unlicensed spectrum, but also enable the WUS+DRX mechanism to operate on the SL-U system, thus saving the energy consumption of the second terminal device.

Exemplarily, the first terminal device may determine the second transmission resource in any one of the following first manner, the second manner or the third manner.

### First manner

The first terminal device determines the second transmission resource based on scheduling information or configuration information sent by a network device.

For example, the first terminal device sends the first information (e.g., 1-bit information) to the network device, and the network device schedules or configures the second transmission resource for the terminal after the network device receives the first information. Specifically, if the first terminal device determines the second transmission resource after the first terminal device sends the wake up signal to the second terminal device, the first terminal device may send the first information to the network device after the wake up signal is sent. If the first terminal device determines the second transmission resource before the LBT is performed on the first transmission resource, the first terminal device sends the first information before the LBT is performed on first transmission resource. The second transmission resource scheduled or configured by the network device for the first terminal device is within the active time period corresponding to the wake up signal sent by the first terminal device, For example, the active time period is the on duration of the latest DRX cycle corresponding to the wake up signal.

### Second manner

The first terminal device determines the second transmission resource within the active time period by means of resource sensing.

Exemplarily, after the first terminal device sends the wake up signal to the second terminal device, the first terminal device determines the second transmission resource within the active time period corresponding to the wake up signal by means of resource sensing. Alternatively, before the first terminal device performs the LBT on the first transmission resource, the first terminal device determines, by means of resource sensing, the second transmission resource within the active time period corresponding to the wake up signal transmitted on the first transmission resource.

Exemplarily, as shown in FIG. 11, the first terminal device determines the resource selection window of n+T1 to n+T2, and the resource sensing window of n-T0 to n-T_{proc,0}, n is a slot where the first terminal device triggers the resource selection or resource reselection or a slot where the higher layer triggers the physical layer to report the candidate resource set, and for T0, T1, T2, T_{proc,0}, reference may be made to the related description of FIG. 7. The first terminal device initializes the resource set A, where the resource set A includes the candidate resources within the resource selection window; the first terminal device performs the resource exclusion according to the sidelink control information (e.g., the first sidelink control information involved in the foregoing) sensed within the resource sensing window and/or the non-sensing slot; and selects, in the resource set A subjected to the resource exclusion, a candidate resource located within the active time period (e.g., the on duration of the latest DRX cycle corresponding to the wake up signal) corresponding to the wake up signal (e.g., the wake up signal already sent on the first transmission resource or planned to be sent on the first transmission resource by the first terminal device) as a second transmission resource. If in the resource set A determined after the resource exclusion, no remaining candidate resources exist within the active time period, the first terminal device may select at least one candidate resource located within the active time period to enable the selected at least one candidate resource to be included in the resource set A, and selects a candidate resource located within the active time period from among the resource set A, as the second transmission resource.

### Third manner

The first terminal device determines the resource randomly selected within the active time period as the second transmission resource.

Exemplarily, after the first terminal device sends the wake up signal to the second terminal device, the first terminal device determines the resource randomly selected within the active time period corresponding to the wake up signal as the second transmission resource. Alternatively, before the first terminal device performs the LBT on the first transmission resource, the first terminal device determines the resource randomly selected within the active time period corresponding to the wake up signal transmitted on the first transmission resource as the second transmission resource.

Preferred implementations of the present disclosure have been described in detail above with reference to the accompanying drawings. However, the present disclosure is not limited to the specific details of the implementations involved in the foregoing. Within the scope of the technical conception of the present disclosure, a variety of simple modifications may be made to the technical solution of the present disclosure, and such simple modifications shall fall within the scope of protection of the present disclosure. For example, various specific technical features described in the specific embodiments involved in the foregoing may be combined in any suitable manner without contradiction, and various possible combinations are not further described in the present disclosure, in order to avoid unnecessary repetition. For another example, any combination may be made between various implementations of the present disclosure, as long as the combination does not depart from the idea of the present disclosure, and the combinations shall also be considered as the contents of the present disclosure.

It is to be understood that in various method embodiments of the present disclosure, the sequence number(s) of the above processes do not imply the sequence(s) of execution, and the sequence of execution of each process should be determined according to the functions and internal logic thereof, and should not constitute any limitation on the implementation process of the embodiments of the present disclosure.

The method embodiments of the present disclosure have been described in detail above with reference to FIG. 1 to FIG. 11, and the device embodiments of the present disclosure are described in detail below with reference to FIG. 12 to FIG. 15.

FIG. 12 is a schematic block diagram of a first terminal device 300 according to an embodiment of the present disclosure.

As shown in FIG. 12, the first terminal device 300 may include a sensing unit 310 and a sending unit 320.

The sensing unit 310 is configured to perform LBT on at least one first transmission resource.

The sending unit 320 is configured to send a wake up signal to a second terminal device on a first transmission resource on which the LBT is successful among the at least one first transmission resource.

Herein, an active time period corresponding to the wake up signal includes a second transmission resource, and the second transmission resource is used for transmission of a first physical sidelink channel.

In some embodiments, after the sending unit 320 sends the wake up signal to the second terminal device, the sending unit 320 is further configured to:
determine the second transmission resource.

In some embodiments, before the sensing unit 310 performs the LBT on at least one first transmission resource, the sending unit 320 is further configured to:
determine the second transmission resource.

In some embodiments, the sending unit 320 is further configured to:
discard or re-determine the second transmission resource if the LBT performed on each of the at least one first transmission resource is failed.

In some embodiments, the sending unit 320 is specifically configured to:
determine the second transmission resource based on scheduling information or configuration information sent by a network device.

In some embodiments, the sending unit 320 is specifically configured to:
send first information to the network device,
where the first information is used for requesting the network device to schedule or configure the second transmission resource for the first terminal device.

In some embodiments, the first information is single-bit information, or the first information is sequence-based information.

In some embodiments, the first information is carried in a SR and/or a BSR, and/or the first information is beard by a PUCCH and/or a PUSCH.

In some embodiments, the sending unit 320 is specifically configured to:
determine the second transmission resource within the active time period by means of resource sensing.

In some embodiments, the sending unit 320 is specifically configured to:
determine a resource selection window and a resource sensing window;
initialize a resource set, where the resource set includes candidate resources within the resource selection window;
perform resource exclusion on the candidate resources in the resource set based on sidelink control information sensed within the resource sensing window and/or an non-sensing time unit, to obtain a resource set subjected to the resource exclusion; and
if the resource set subjected to the resource exclusion has candidate resources located within the active time period, determine the second transmission resource among the candidate resources located within the active time period in the resource set subjected to the resource exclusion.

In some embodiments, the sending unit 320 is further configured to:
if the resource set subjected to the resource exclusion does not have candidate resources located within the active time period, after selecting at least one candidate resource located within the active time period and adding selected at least one candidate resource into the resource set subjected to the resource exclusion, determine the second transmission resource among the candidate resources located within the active time period in the resource set subjected to the resource exclusion.

In some embodiments, the sending unit 320 is specifically configured to:
determine a resource randomly selected within the active time period as the second transmission resource.

In some embodiments, the active time period includes multiple time periods that are continuous or discontinuous in time domain.

In some embodiments, the active time period includes on durations of one or more DRX cycles.

In some embodiments, the active time period includes an on duration of a latest DRX cycle corresponding to the wake up signal.

In some embodiments, the first transmission resource is scheduled or configured by a network device, or the first transmission resource is a resource determined by the first terminal device.

In some embodiments, the first transmission resource includes at least one of: a PSFCH resource, a PSCCH resource, or a PSSCH resource.

In some embodiments, the wake up signal is a sequence-based signal, or the wake up signal is sidelink control information, or the wake up signal is a MAC CE or PC5-RRC signaling.

In some embodiments, the wake up signal is beard by at least one of: a PSFCH, a PSCCH, or a PSSCH.

In some embodiments, the first physical sidelink channel includes a PSCCH and/or a PSSCH.

It is to be understood that the device embodiments correspond to the method embodiments, and similar descriptions of the device embodiments may refer to the method embodiments. In particular, the first terminal device 300 shown in FIG. 12 may correspond to a corresponding entity for performing the method 200 in the embodiments of the present disclosure, and the above and other operations and/or functions of all units in the first terminal device 300 respectively implement the corresponding flows of the methods in the embodiments of the present disclosure. For brevity, details are not elaborated herein again.

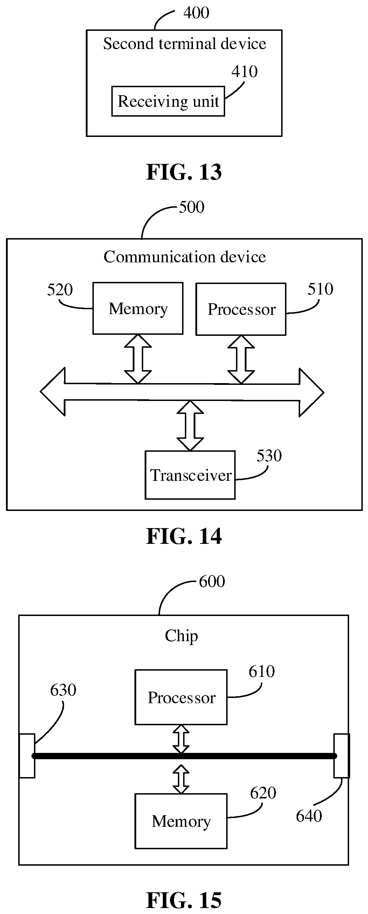

FIG. 13 is a schematic block diagram of a second terminal device 400 according to an embodiment of the present disclosure.

As shown in FIG. 13, the second terminal device 400 may include a receiving unit 410.

The receiving unit 410 is configured to receive a wake up signal sent by a first terminal device.

Herein, an active time period corresponding to the wake up signal includes a second transmission resource, and the second transmission resource is used for transmission of a first physical sidelink channel.

In some embodiments, the receiving unit 410 is specifically configured to:
detect, in a resource pool, the wake up signal sent by the first terminal device.

In some embodiments, the active time period includes multiple time periods that are continuous or discontinuous in time domain.

In some embodiments, the active time period includes on durations of one or more DRX cycles.

In some embodiments, the active time period includes an on duration of a latest DRX cycle corresponding to the wake up signal.

In some embodiments, the wake up signal is a sequence-based signal, or the wake up signal is sidelink control information, or the wake up signal is a MAC CE or PC5-RRC signaling.

In some embodiments, the wake up signal is beard by at least one of: a PSFCH, a PSCCH, or a PSSCH.

In some embodiments, the first physical sidelink channel includes a PSCCH and/or a PSSCH.

It is to be understood that the device embodiments correspond to the method embodiments, and similar descriptions of the device embodiments may refer to the method embodiments. In particular, the second terminal device 400 shown in FIG. 13 may correspond to a corresponding entity for performing the method 200 in the embodiments of the present disclosure, and the above and other operations and/or functions of all units in the second terminal device 400 respectively implement the corresponding flows of the methods in the embodiments of the present disclosure. For brevity, details are not elaborated herein again.

The communication device of the embodiment of the present disclosure is described above from the perspective of functional modules with reference to the accompanying drawings. It should be understood that the functional modules may be implemented in hardware form, by instructions in software form, or by a combination of hardware and software modules. In particular, each operation of the method embodiments in the embodiments of the present disclosure can be implemented by the integrated logic circuit of the hardware in the processor and/or the instruction in software form, and the steps of the methods disclosed in connection with the embodiments of the present disclosure may be directly embodied as being performed by the hardware decoding processor, or may be performed with a combination of the hardware and software modules in the decoding processor. Optionally, the software module may be located in random memory, flash memory, read-only memory, programmable read-only memory or electrically erasable programmable memory, register and other mature storage media in the art. The storage medium is located in the memory, and the processor reads the information in the memory and completes the steps of the method embodiment involved in the foregoing in combination with its hardware.

For example, the sensing unit, the sending unit or the receiving unit involved in the foregoing may be implemented by a transceiver.

FIG. 14 is a schematic structural diagram of a communication device 500 according to an embodiment of the present disclosure.

As shown in FIG. 14, the communication device 500 may include a processor 510.

Herein, the processor 510 may be configured to invoke and execute the computer program stored in the memory to perform each of the methods in the embodiments of the present disclosure.

As shown in FIG. 14, the communication device 500 may further include a memory 520.

The memory 520 may be configured to store information, and may also be configured to store code, instructions, and the like executed by the processor 510. Herein, the processor 510 may be configured to invoke and execute the computer program stored in the memory 520 to perform each of the methods according to the embodiments of the present disclosure. The memory 520 may be a separate device independent of the processor 510, or may be integrated into the processor 510.

As shown in FIG. 14, the communication device 500 may further include a transceiver 530.

The processor 510 may control the transceiver 530 to communicate with other devices. Specifically, the transceiver 530 may send information or data to other devices, or receive information or data from other devices. The transceiver 530 may include a transmitter and a receiver. The transceiver 530 may further include one or more antennas.

It is to be understood that the various components in the communication device 500 are connected by a bus system including a power bus, a control bus and a status signal bus, in addition to a data bus.

It is to be understood that the communication device 500 may be the first terminal device in the embodiments of the present disclosure. The communication device 500 may implement corresponding processes that are implemented by the first terminal device in each of the methods in the embodiments of the present disclosure. That is to say, the communication device 500 in the embodiments of the present disclosure may correspond to the first terminal device 300 in the embodiment of the present disclosure, and may correspond to the corresponding entity for performing the method 200 of the embodiments of the present disclosure. For brevity, details are not elaborated herein again. Similarly, the communication device 500 may be the second terminal device in the embodiments of the present disclosure. The communication device 500 may implement corresponding processes that are implemented by the second terminal device in each of the methods in the embodiments of the present disclosure. That is to say, the communication device 500 in the embodiments of the present disclosure may correspond to the second terminal device 400 in the embodiment of the present disclosure, and may correspond to the corresponding entity for performing the method 200 of the embodiments of the present disclosure. For brevity, details are not elaborated herein again.

In addition, the embodiment of the present disclosure further provides a chip.

For example, the chip may be an integrated circuit chip having signal processing capability and can implement or perform the methods, operations and logic block diagrams disclosed in embodiments of the present disclosure. The chip may also be referred to as a system-level chip, a system chip, a chip system, or a system-on-chip, etc. The chip may be applied to various communication devices such that a communication device mounted with the chip can perform the methods, operations and logic block diagrams disclosed in embodiments of the present disclosure.

FIG. 15 is a schematic structural diagram of a chip 600 according to an embodiment of the present disclosure.

As shown in FIG. 15, the chip 600 may include a processor 610.

Herein, the processor 610 may be configured to invoke and execute the computer program stored in the memory to perform each of the methods in the embodiments of the present disclosure.

As shown in FIG. 15, the chip 600 may further include a memory 620.

Herein, the processor 610 may be configured to invoke and execute the computer program stored in the memory 620 to perform each of the methods according to the embodiments of the present disclosure. The memory 620 may be configured to store indication information, and may also be configured to store code, instructions, and the like executed by the processor 610. The memory 620 may be a separate device independent of the processor 610, or may be integrated into the processor 610.

As shown in FIG. 15, the chip 600 may further include an input interface 630.

Herein, the processor 610 may control the input interface 630 to communicate with other devices or chips. Specifically, the input interface 1530 may obtain information or data from other devices or chips.

As shown in FIG. 15, the chip 600 may further include an output interface 640.

Herein, the processor 610 may control the output interface 640 to communicate with other devices or chips. Specifically, the output interface 1540 may output information or data to other devices or chips.

It is to be understood that the chip may be applied to the first terminal device in the embodiments of the present disclosure. The chip may implement the corresponding processes implemented by the first terminal device in each of the methods in the embodiments of the present disclosure, or implement the corresponding processes implemented by the second terminal device in each of the methods in the embodiments of the present disclosure. For brevity, details are not elaborated herein again.

It is to be understood that the various components in the chip 600 are connected by a bus system including a power bus, a control bus and a status signal bus, in addition to a data bus.

The processor referred to above may include, but are not limited to:
a general purpose processor, a digital signal processor (DSP), an application specific integrated circuit (ASIC), a field programmable gate array (FPGA) or other programmable logic devices, discrete gate or transistor logic devices, discrete hardware components, and the like.

The processor may be configured to implement or perform the methods, operations, and logic block diagrams disclosed in embodiments of the present disclosure. The steps of the methods disclosed in connection with the embodiments of the present disclosure may be directly embodied as being performed by the hardware decoding processor, or may be performed with a combination of the hardware and software modules in the decoding processor. The software module may be located in random memory, flash memory, read-only memory, programmable read-only memory or erasable programmable memory, register and other mature storage media in the art. The storage medium is located in the memory, and the processor reads the information in the memory and completes the steps of the method involved in the foregoing in combination with its hardware.

The memory involved in the foregoing include, but is not limited to:
a volatile memory or a non-volatile memory, or may include a volatile memory and a non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM), which is used as an external high-speed cache. By way of example but not restrictive description, many forms of RAMs may be used, for example, a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch link DRAM (SLDRAM), and a Direct Rambus RAM (DR RAM).

It is to be noted that the memory described in this specification includes these and any other proper types of memories.

An embodiment of the present disclosure further provides a computer-readable storage medium configured to store a computer program. The computer-readable storage medium stores one or more programs including instructions that, when executed by a portable electronic device including multiple application programs, enable the portable electronic device to perform the method for wireless communication in the present disclosure. Optionally, the computer-readable storage medium may be applied to the first terminal device in the embodiments of the present disclosure, and the computer program causes a computer to perform the corresponding processes performed by the first terminal device in various methods of the embodiments of the present disclosure. For brevity, details are not elaborated herein again. Optionally, the computer-readable storage medium may be applied to the second terminal device in the embodiments of the present disclosure, and the computer program causes a computer to perform the corresponding processes performed by the second terminal device in various methods of the embodiments of the present disclosure. For brevity, details are not elaborated herein again.

An embodiment of the present disclosure further provides a computer program product, which includes a computer program. Optionally, the computer program product may be applied to the first terminal device in the embodiments of the present disclosure, and the computer program causes a computer to perform the corresponding processes performed by the first terminal device in various methods of the embodiments of the present disclosure. For brevity, details are not elaborated herein again. Optionally, the computer program product may be applied to the second terminal device in the embodiments of the present disclosure, and the computer program causes a computer to perform the corresponding processes performed by the second terminal device in various methods of the embodiments of the present disclosure. For brevity, details are not elaborated herein again.

An embodiment of the present disclosure further provides a computer program, when executed by a computer, causes the computer to perform the method for wireless communication in the present disclosure. Optionally, the computer program may be applied to the first terminal device in the embodiments of the present disclosure, and the computer program, when is run on a computer, causes the computer to perform the corresponding processes performed by the first terminal device in various methods of the embodiments of the present disclosure. For brevity, details are not described herein again. Optionally, the computer program may be applied to the second terminal device in the embodiments of the present disclosure, and the computer program, when is run on a computer, causes the computer to perform the corresponding processes performed by the second terminal device in various methods of the embodiments of the present disclosure. For brevity, details are not described herein again.

The present disclosure further provides a communication system including the second terminal device and the first terminal device involved in the foregoing to form the communication system 100 as shown in FIG. 1. For brevity, details are not described herein again. It is to be noted that the term "system" in this disclosure can also be referred to as "network management architecture" or "network system".

It is also to be understood that the term used in the embodiments of the present disclosure and the appended claims is for the purpose of describing the particular embodiments only and is not intended to limit the present disclosure. For example, as used in the disclosure and the appended claims, the singular forms "a", "said" and "the" are also intended to include the plural forms unless the context clearly indicates otherwise.

Those of ordinary skill in the art may realize that units and algorithm steps of various examples described in combination with the embodiments disclosed herein may be implemented by electronic hardware, or a combination of computer software and electronic hardware. Whether the functions are executed in a hardware or software manner depends on specific applications and design constraints of the technical solutions. Professionals may implement the described functions for each specific application by using different methods, but such implementations shall not be regarded as outside the scope of the embodiments of the present disclosure. When the functions are realized in a form of software functional units and sold or used as an independent product, they may be stored in a computer-readable storage medium. Bsed on this understanding, the technical solutions of the embodiments of the disclosure essentially or the parts that contribute to the prior art, or part of the technical solutions can be embodied in the form of a software product. The computer software product is stored in a storage medium, including multiple instructions for causing a computer device (which may be a personal computer, a server, or a terminal device, and the like) to execute all or part of the steps of the method described in the embodiments of the disclosure. The foregoing storage medium includes a USB flash disk, a mobile hard disk drive, an ROM, an RAM, and various media that can store program codes, such as a magnetic disk or an optical disk.

It may be understood by those skilled in the art that, for the specific working processes of the aforementioned systems, apparatuses and units, reference may be made to the corresponding processes in the aforementioned method embodiments, and such specific working processes of the systems, devices and units are not described herein again for the purpose of convenient and brief description In several embodiments provided by the present disclosure, it should be understood that the disclosed systems, devices and methods may be implemented in other ways. For example, in the embodiment of the device described above, the division of the units, modules or components is only a logical functional division, and there may be another division method in the actual implementation, for example, multiple units, modules or components may be combined or integrated into another system, or some units, modules or components may be ignored or not implemented. The unit, module or component described as a separation or display part may or may not be physically separated, that is, it may be located in one place, or it may be distributed to multiple network units. Some or all of the units, modules or components may be selected according to the actual requirements to achieve the purpose of the embodiments. Finally, it is to be noted that the mutual coupling or direct coupling or communication connection shown or discussed above may be indirect coupling or communication connection through some interfaces, devices or units, and may be electrical, mechanical or other forms.

The above are only specific implementations of the application and not intended to limit the scope of protection of the application. Any variations or replacements apparent to those skilled in the art within the technical scope disclosed by the disclosure shall fall within the scope of protection of the application. Therefore, the scope of protection of the application shall be subject to the scope of protection of the claims.

## Claims

1. A method for wireless communication, applied to a first terminal device, comprising:
performing Listen Before Talk, LBT, on at least one first transmission resource; and
sending a wake up signal to a second terminal device on a first transmission resource on which the LBT is successful among the at least one first transmission resource,
wherein an active time period corresponding to the wake up signal comprises a second transmission resource, the second transmission resource being used for transmission of a first physical sidelink channel.

2. The method of claim 1, further comprising: after sending the wake up signal to the second terminal device,
determining the second transmission resource.

3. The method of claim 1, further comprising: before performing the LBT on the at least one first transmission resource,
determining the second transmission resource.

4. The method of claim 3, further comprising:
discarding or re-determining the second transmission resource if the LBT performed on each of the at least one first transmission resource is failed.

5. The method of any one of claims 2 to 4, wherein determining the second transmission resource comprises:
determining the second transmission resource based on scheduling information or configuration information sent by a network device.

6. The method of claim 5, further comprising:
sending first information to the network device,
wherein the first information is used for requesting the network device to schedule or configure the second transmission resource for the first terminal device.

7. The method of claim 6, wherein the first information is single-bit information, or the first information is sequence-based information.

8. The method of claim 6, wherein the first information is carried in a Scheduling Request, SR, and/or a Buffer Status Report, BSR, and/or the first information is beard by a Physical Uplink Control Channel, PUCCH, and/or a Physical Uplink Shared Channel, PUSCH.

9. The method of any one of claims 2 to 4, wherein determining the second transmission resource comprises:
determining the second transmission resource within the active time period by means of resource sensing.

10. The method of claim 9, wherein determining the second transmission resource within the active time period by means of resource sensing comprises:
determining a resource selection window and a resource sensing window;
initializing a resource set, wherein the resource set comprises candidate resources within the resource selection window;
performing resource exclusion on the candidate resources in the resource set based on sidelink control information sensed within the resource sensing window and/or an non-sensing time unit, to obtain a resource set subjected to the resource exclusion; and
if the resource set subjected to the resource exclusion has candidate resources located within the active time period, determining the second transmission resource among the candidate resources located within the active time period in the resource set subjected to the resource exclusion.

11. The method of claim 10, further comprising:
if the resource set subjected to the resource exclusion does not have candidate resources located within the active time period, after selecting at least one candidate resource located within the active time period and adding selected at least one candidate resource into the resource set subjected to the resource exclusion, determining the second transmission resource among the candidate resources located within the active time period in the resource set subjected to the resource exclusion.

12. The method of any one of claims 2 to 4, wherein determining the second transmission resource comprises:
determining a resource randomly selected within the active time period as the second transmission resource.

13. The method of any one of claims 1 to 12, wherein the active time period comprises a plurality of time periods that are continuous or discontinuous in time domain.

14. The method of any one of claims 1 to 12, wherein the active time period comprises on durations of one or more Discontinuous Reception, DRX, cycles.

15. The method of any one of claims 1 to 12, wherein the active time period comprises an on duration of a latest DRX cycle corresponding to the wake up signal.

16. The method of any one of claims 1 to 15, wherein the first transmission resource is scheduled or configured by a network device, or the first transmission resource is a resource determined by the first terminal device.

17. The method of any one of claims 1 to 16, wherein the first transmission resource comprises at least one of: a Physical Sidelink Feedback Channel, PSFCH, resource, a Physical Sidelink Control Channel, PSCCH, resource, or a Physical Sidelink Shared Channel, PSSCH, resource.

18. The method of any one of claims 1 to 17, wherein the wake up signal is a sequence-based signal, or the wake up signal is sidelink control information, or the wake up signal is a Media Access Control, MAC, Control Element, CE, or PC5 Radio Resource Control, RRC, signaling.

19. The method of any one of claims 1 to 18, wherein the wake up signal is beard by at least one of: a PSFCH, a PSCCH, or a PSSCH.

20. The method of any one of claims 1 to 19, wherein the first physical sidelink channel comprises a PSCCH and/or a PSSCH.

21. A method for wireless communication, applied to a second terminal device, comprising:
receiving a wake up signal sent by a first terminal device, wherein an active time period corresponding to the wake up signal comprises a second transmission resource, the second transmission resource being used for transmission of a first physical sidelink channel.

22. The method of claim 21, wherein receiving the wake up signal sent by the first terminal device comprises:
detecting, in a resource pool, the wake up signal sent by the first terminal device.

23. The method of claim 21 or 22, wherein the active time period comprises a plurality of time periods that are continuous or discontinuous in time domain.

24. The method of claim 21 or 22, wherein the active time period comprises on durations of one or more Discontinuous Reception, DRX, cycles.

25. The method of claim 21 or 22, wherein the active time period comprises an on duration of a latest DRX cycle corresponding to the wake up signal.

26. The method of any one of claims 21 to 25, wherein the wake up signal is a sequence-based signal, or the wake up signal is sidelink control information, or the wake up signal is a Media Access Control, MAC, Control Element, CE, or PC5 Radio Resource Control, RRC, signaling.

27. The method of any one of claims 21 to 26, wherein the wake up signal is beard by at least one of: a Physical Sidelink Feedback Channel, PSFCH, a Physical Sidelink Control Channel, PSCCH, or a Physical Sidelink Shared Channel, PSSCH.

28. The method of any one of claims 21 to 27, wherein the first physical sidelink channel comprises a PSCCH and/or a PSSCH.

29. A first terminal device, comprising:
a sensing unit, configured to perform Listen Before Talk, LBT, on at least one first transmission resource; and
a sending unit, configured to send a wake up signal to a second terminal device on a first transmission resource on which the LBT is successful among the at least one first transmission resource,
wherein an active time period corresponding to the wake up signal comprises a second transmission resource, the second transmission resource being used for transmission of a first physical sidelink channel.

30. A second terminal device, comprising:
a receiving unit, configured to receive a wake up signal sent by a first terminal device, wherein an active time period corresponding to the wake up signal comprises a second transmission resource, the second transmission resource being used for transmission of a first physical sidelink channel.

31. A first terminal device, comprising:
a transceiver, a processor and a memory, wherein the memory is configured to store a computer program and the processor is configured to invoke and execute the computer program stored in the memory, to enable the transceiver and/or the processor to perform the method of any one of claims 1 to 20.

32. A second terminal device, comprising:
a transceiver, a processor and a memory, wherein the memory is configured to store a computer program and the processor is configured to invoke and execute the computer program stored in the memory, to enable the transceiver and/or the processor to perform the method of any one of claims 21 to 28.

33. A chip, comprising:
a processor configured to invoke and execute a computer program from a memory, to cause a device on which the chip is mounted to perform the method of any one of claims 1 to 20, or the method of any one of claims 21 to 28.

34. A computer storage medium configured to store a computer program, wherein the computer program, when executed on a computer, causes the computer to perform the method of any one of claims 1 to 20, or the method of any one of claims 21 to 28.

35. A computer program product comprising computer program instructions, wherein the computer program instructions cause a computer to perform the method of any one of claims 1 to 20, or the method of any one of claims 21 to 28.

36. A computer program that causes a computer to perform the method of any one of claims 1 to 20, or the method of any one of claims 21 to 28.
